# EUROPÄISCHE PATENTSCHRIFT

(11) **EP 0 707 445 B1**
(45) Veröffentlichungstag und Bekanntmachung des Hinweises auf die Patenterteilung: **27.08.1997**
(21) Anmeldenummer: 94923689.7
(22) Anmeldetag: 27.06.1994
(51) Int. Cl.: A01N 25/04

(54) **WÄSSRIGE, MEHRPHASIGE, STABILE FERTIGFORMULIERUNG FÜR PFLANZENSCHUTZ-WIRKSTOFFE UND VERFAHREN ZU IHRER HERSTELLUNG**
STABLE, READY-TO-USE, MULTI-PHASE AQUEOUS PESTICIDE FORMULATIONS AND METHODS OF PREPARING THEM
FORMULATION AQUEUSE POLYPHASEE ET STABLE PRETE A L'EMPLOI POUR PRODUITS PHYTOSANITAIRES ET PROCEDE DE PREPARATION

(30) Priorität: 03.07.1993 DE 4322211
(43) Veröffentlichungstag der Anmeldung: 24.04.1996
(73) Patentinhaber: BASF AKTIENGESELLSCHAFT, 67056 Ludwigshafen (DE)
(72) Erfinder: WIGGER, August, D-67141 Neuhofen (DE); FRICKE, Hans-Michael, D-67117 Limburgerhof (DE); KARDORFF, Uwe, D-68159 Mannheim (DE); PARG, Adolf, D-67098 Bad Dürkheim (DE); KOBER, Reiner, D-67136 Fu gönheim (DE)
(86) Internationale Anmeldenummer: EP9402085
(87) Internationale Veröffentlichungsnummer: WO9501722

(56) Entgegenhaltungen:
- EP-A- 0 017 001
- EP-A- 0 028 052
- EP-A- 0 088 049
- EP-A- 0 217 125
- EP-A- 0 289 356
- EP-A- 0 343 142
- EP-A- 0 404 201
- WO-A-87/05778
- FR-A- 2 298 275
- FR-A- 2 452 250
- PESTICIDE SCIENCE., Bd.29, 1990, BARKING GB Seiten 437 - 449 D.SEAMAN 'Trends in the Formulation of Pesticides - An Overview' in der Anmeldung erwähnt
- W.VAN FALKENBURG 'PESTICIDE FORMULATIONS' 1973 , M.DEKKER , NEW YORK, US Chapter 9, 'PENETRATION AND TRANSLOCATION OF HERBICIDES', pages 387-439 siehe Seite 398 - Seite 401

## Beschreibung

Die vorliegende Erfindung betrifft eine wäßrige, mehrphasige, stabile Fertigformulierung für Pflanzenschutz-Wirkstoffe, enthaltend neben Wasser
a) 10 bis 700 g/l eines oder mehrerer Pflanzenschutz-Wirkstoffe,
b) 10 bis 70 g/l eines oder mehrerer Blockpolymeren als Dispergiermittel, welche aus einem Polyoxypropylenkern vom Molgewicht 3000 bis 3500 und der Differenz zur Molmasse 6000 bis 7000 aus Ethylenoxideinheiten bestehen,
c) 5 bis 80 g/l eines anionischen Dispergiermittels,
d) 50 bis 500 g/l eines oder mehrerer Netzmittel aus der Gruppe der Polyoxyethylen- oder Polyoxyethylen-Polyoxypropylen-Fettalkohole,
e) 0,5 bis 5 g/l eines oder mehrerer Verdickungsmittel und
f) ggf. ein organisches Lösungsmittel

Außerdem betrifft die Erfindung Verfahren zur Herstellung dieser Fertigformulierungen sowie die Verwendung von Pflanzenschutz-Wirkstoffen zur Bereitung derartiger Fertigformulierungen.

Zur Erzielung einer gleichmäßigen Benetzung der zu behandelnden Pflanzen, zur Verbesserung der Aufnahme der Wirkstoffe in die zu behandelnden Pflanzen und zur Unterstützung des Transports der Wirkstoffe in den behandelten Pflanzen werden den Pflanzenschutz-Wirkstoffen vor der Anwendung zusätzliche Hilfsstoffe, z.B. Netzmittel zugesetzt. Diese Hilfsstoffe können entweder bereits der Formulierung des Pflanzenschutz-Wirkstoffs beigegeben werden oder sie können vom Anwender der Spritzbrühe des Wirkstoffs zugegeben werden.

Im Hinblick auf eine einfache und sichere Handhabung und eine problemlose Dosierbarkeit dieser Hilfsstoffe durch den Anwender und im Hinblick auf die Vermeidung von zusätzlich zu entsorgenden Verpackungen werden Formulierungen von Pflanzenschutz-Wirkstoffen bevorzugt, die derartige Hilfsmittel bereits enthalten.

Da es sich bei diesen Netzmitteln im allgemeinen um flüssige bzw. wachsartige Verbindungen handelt, können sie nur in besonderen Fällen zur Herstellung von Feststoff-Formulierungen verwendet werden. Um jedoch die pulverige Konsistenz von Festformulierungen zu erhalten, müssen die flüssigen Netzmittel in einem separaten Arbeitsschritt auf absorbierenden Materialien wie Kieselgel aufgezogen und vermahlen werden, was die Formulierungskosten wesentlich erhöht und gleichzeitig die Menge des einsetzbaren Netzmittels limitiert. Für den Anwender sind hochkonzentrierte stabile Mehrphasengemische vorteilhafter, da sie im Hinblick auf die biologischen Wirksamkeit optimiert sind und Probleme bei der Mischung im Spritztank entfallen (D. Seaman, Pesticide Sci., 1990, 29, 437-449; Trends in the Formulation of Pesticides). Üblicherweise werden daher flüssige Fertigformulierungen (Formulierungen aus Pflanzenschutz-Wirkstoffen und Hilfsstoffen) vertrieben.

Aus der Literatur sind als flüssige Formulierungen für Pflanzenschutz-Wirkstoffe beispielsweise Emulsionskonzentrate (EC) und Suspensionskonzentrate (SC) bekannt (vgl. Th. F. Tadros, Disperse Systems in Pesticidal Formulations; Advances in Colloid and Interface Science, 32 (1990) 205-234) wobei im Falle der Emulsionskonzentrate ein organisches Lösungsmittel und im Falle der Suspensionskonzentrate Wasser als Medium bzw. Trägerstoff Verwendung findet.

Ein Nachteil der EC-Formulierung liegt in der Verwendung relativ großer Mengen an organischen, meist leichtbrennbaren Lösungsmitteln, die eine zusätzliche Gefährdung des Anwenders und eine erhöhte Belastung der Umwelt zur Folge haben.

Bei der Bereitstellung von geeigneten SC-Formulierungen stellt sich dagegen das Problem, daß wegen der häufig schlechten Löslichkeit der üblicherweise verwendeten Netzmittel in Wasser keine homogene oder keine stabile homogene Formulierung erreicht werden kann.

Aufgabe der vorliegenden Erfindung war die Bereitstellung einer phasenstabilen Fertigformulierung von Pflanzenschutz-Wirkstoffen und Hilfsmitteln, die die vorstehenden Nachteile nicht aufweist.

Demgemäß wurde die eingangs beschriebene Fertigformulierung gefunden. Außerdem wurden Verfahren zur Herstellung derartiger Fertigformulierungen gefunden.

Die erfindungsgemäßen Fertigformulierungen enthalten im allgemeinen 10 bis 700 g/l, vorzugsweise 50 bis 600 g/l, insbesondere 100 bis 500 g/l, eines oder mehrerer Pflanzenschutz- Wirkstoffe.

In den erfindungsgemäßen Fertigformulierungen können grundsätzlich alle Pflanzenschutz-Wirkstoffe aufbereitet werden, deren Schmelzpunkt mindestens 50°C beträgt. Die Aufbereitung von Pflanzenschutz-Wirkstoffen mit niedrigerem Schmelzpunkt ist im allgemeinen ebenfalls möglich, sofern geeignete Verfahrensbedingungen bei der Herstellung eingehalten werden.

Beispiele für geeignete Pflanzenschutzwirkstoffe sind u.a. 2-Chlor-4-ethylamino-6-isopropylamino-1,3,5-triazin (Atrazin), Methyl-1H-benzimidazol-2-ylcarbamat (Carbendazim), 5-Amino-4-chlor-2-phenylpyridazin-3(2H)-on (Chloridazon), 3-Ethoxycarbonylaminophenyl-phenylcarbamat (Desmedipham), rel-(2R, 3S)-3-(2-Chlorphenyl)-2-(4-fluorphenyl)-2-[(1H-1,2,4-triazol-1-yl)methyl]-oxiran (Epoxiconazol), N,N-Dimethyl-N'-[4-(1-methylethyl)phenyl]harnstoff (Isoproturon), 2-Chlor-N-(2,6-dimethylphenyl)-N-(1H-pyrazol-1-ylmethyl)acetamid (Metazachlor), 3-(4-Bromphenyl)-N-methoxy-N-methylharnstoff (Metobromuron), 3-[(Methoxycarbonyl)amino]phenyl-(3-methylphenyl)carbamat (Phenmedipham), Dimethyl-[1,2-phenylenbis(iminocarbonothioyl]biscarbamat (Thiophanate-methyl) und (R,S)-3-(3,5-dichlorphenyl)-5-ethenyl-5-methyl-2,4-oxazolidindion (Vinclozolin), insbesondere bevorzugt Epoxiconazol.

Die erfindungsgemäßen Fertigformulierungen enthalten desweiteren 10 bis 70 g/l eines oder mehreren Blockcopolymeren b) als Dispergiermittel, welche aus einem Polyoxypropylenkern vom Molgewicht 3000 bis 3500 und der Differenz zur Molmasse 6000 bis 7000 aus Ethylenoxideinheiten bestehen. Beispiele für diese Dispergiermittel sind die Pluronic® Marken der BASF Corporation.

Als Komponente c) enthalten die erfindungsgemäßen Fertigformulierungen 5 - 80 g/l eines anionischen Dispergiermittels.

Es können handelsübliche wasserlösliche Dispergiermittel anionischen Charakters der folgenden Strukturklassen zum Einsatz kommen:
R¹-SO₃-Salz, R²-SO₄-Salz.

In den vorstehenden Formeln haben die verwendeten Substituenten und die Indizes die folgende Bedeutung
- R¹: - geradkettiges oder verzweigtes Alkyl mit 1 bis 20 C-Atomen, vorzugsweise mit 8 bis 18 C-Atomen, beispielsweise Dodecyl;
- Aryl, z.B. Phenyl oder Naphthyl;
- Aryl, insbesondere Phenyl, welches eine geradkettige oder verzweigte Alkylgruppe wie vorstehend genannt trägt, z.B. Dodecylphenyl;
- ein Kondensationsprodukt aus Phenol mit Harnstoff und Formaldehyd;
- R²: - geradkettiges oder verzweigtes Alkyl mit 1 bis 20 C-Atomen, vorzugsweise mit 8 bis 18 C-Atomen, beispielsweise Dodecyl;
- Polyethoxy mit 2 bis 5 Ethoxy-Einheiten, welches eine geradkettige oder verzweigte Alkylgruppe trägt;
- Polyethoxy mit 2 bis 25 Ethoxy-Einheiten, welches einen durch geradkettiges oder verzweigtes Alkyl substituierten Arylrest trägt, z.B. Nonylphenylpolyethoxy mit 20 Ethoxy-Einheiten;

Als anionische Dispergiermittel (c) kommen auch Polymere mit einem Molekulargewicht von in der Regel 300 bis 1 500 und einer anionischen Gruppe in Betracht. Durch die Verwendung von Polymeren mit niedrigem Molekulargewicht verringert sich die Viskosität der Fertigformulierung gegenüber Formulierungen, welche Polymere mit höherem Molekulargewicht enthalten.

Bevorzugtes Dispergiermittel ist das Natriumsalz eines Kondensationsproduktes aus Phenolsulfonsäure, Harnstoff und Formaldehyd. Solche Kondensationsprodukte werden beispielsweise in der DE-A 11 13 457 und der DE-A 11 78 081 beschrieben. Ein Beispiel für diese Verbindungsklasse ist Wettol® D1 (BASF).

Die erfindungsgemäßen Fertigformulierungen enthalten ein Gemisch aus b) und c). Das Gewichtsverhältnis (b)/(c) betragt üblicherweise 0.75 : 1 bis 1:1 bis 5:1, vorzugsweise 1:1 bis 3:1, insbesondere 1:1 bis 2:1.

Als Netzmittel (d) kommen in dem erfindungsgemäßen Mehrphasengemisch folgende Produkte zum Einsatz:
- Polyoxyethylen- oder Polyoxyethylen-/Polyoxypropylen-Fettalkohole, z.B. wie aus GB-A 643 422 oder Satkowski et al., Ind. Eng. Chem. 49 (1957) 1875 bekannt; besonders geeignete Produkte dieser Gruppe sind beispielsweise unter der Bezeichnung WETTOL®LF (Fa.: BASF) im Handel erhältlich.

Die erfindungsgemäßen Fertigformulierungen enthalten 50 bis 500 g/l, vorzugsweise 50 bis 400 g/l, insbesondere 100 bis 300 g/l eines Netzmittels (d) aus der Gruppe der Polyoxyethylen- oder Polyoxyethylen-/Polyoxypropylen-Restalkohole.

Die Netzmittel (d) dienen in den Fertigformulierungen dazu, die biologische Wirkung der Formulierung durch Förderung der Benetzung und/oder des Transports des Wirkstoffs auf der Oberfläche und in die Pflanze zu unterstützen.

Grundsätzlich kommen für die erfindungsgemäßen Fertigformulierung solche Netzmittel in Betracht, deren CMC-Wert in Wasser < 1%, vorzugsweise 1·10⁻⁵% bis 1·10⁻²%, beträgt.

Je nach der Natur der verwendeten Netzmittel kann es vorteilhaft sein, die Fertigformulierung durch die Zugabe eines organischen Lösungsmittels zu stabilisieren. Ob der Zusatz eines Lösungsmittels notwendig ist, richtet sich im allgemeinen nach der Grenzflächenspannung des verwendeten Netzmittels gegen Wasser. So kann dieser Zusatz bei der Verwendung von Netzmitteln mit einer höheren Grenzflächenspannung entfallen. Sofern man ein Netzmittel mit einer geringeren Grenzflächenspannung verwendet, empfiehlt es sich wenigstens 10 Gew.-% bezogen auf die Menge an Netzmittel eines organischen Lösungsmittels zuzusetzen. Im allgemeinen reicht eine Menge von maximal 150 Gew.-% an Lösungsmittel bezogen auf die Menge an Netzmittel aus. Größere Mengen an Lösungsmittel wirken sich nicht nachteilig auf die Stabilität der Fertigformulierung aus. Sie führen lediglich zu einer erhöhten und damit unerwünschten Belastung der Umwelt und sind außerdem unwirtschaftlich.

Die Grenzflächenspannung des verwendeten Netzmittels bzw. des verwendeten Gemisches aus Netzmittel und organischem Lösungsmittel zu Wasser bei 20°C wird vorteilhaft so gewählt, daß sie mindestens 3·10⁻¹ mN/m beträgt. Um Mischungseffekte auszuschließen, wird die Grenzflächenspannung unmittelbar nach der Zugabe gemessen.

Bei der Verwendung eines zusätzlichen organischen Lösungsmittels ist außerdem zu beachten, daß die Löslichkeit des verwendeten Pflanzenschutz-Wirkstoffs in diesem Lösungsmittel unter 5% liegt, da sonst bei längerer Lagerung der Fertigformulierung durch Ostwald-Kristallwachstum ein Auskristallisieren des Wirkstoffs und damit eine Destabilisierung der Formulierung auftreten kann.

Beispiel für geeignete Lösungsmittel sind aromatische Kohlenwasser auf Alkylbenzolbasis wie z.B. Xylol, Toluol, Trimethylbenzol, Methylethylbenzol, Dimethylethylbenzol, Diethylbenzol, Tetramethylbenzol und Pentamethylbenzol. Besonders geeignet sind Gemische von aromatischen Kohlenwasserstoffen, wie die mit der Bezeichnung Solvesso® (Hersteller Esso) oder Shellsol® (Hersteller Shell) im Handel erhältlichen Lösungsmittel. Als Lösungsmittel auf rein aliphatischer Basis können Paraffinöl (z.B. Linpar®: C₁₄-C₁₇-Kohlenwasserstoff-Fraktion der Fa. Wintershall), aber auch native Öle wie Rapsöl und Sojaöl zum Einsatz kommen, soweit sie das Netzmittel ausreichend zu lösen vermögen.

Als Verdickungsmittel kommen aus der Literatur bekannte Polysaccharide, vorzugsweise auf Xanthan-Gum-Basis, wie Kelzan® (Fa. Kelco, USA) oder Rhodopol® (Fa. Rhone-Poulenc) zum Einsatz.

Die Verdickungsmittel werden in einer Menge von 0,5 bis 5 g, vorzugsweise 1 bis 3 g/l verwendet.

Zur Herstellung einer stabilen Fertigformulierung geht man üblicherweise so vor, daß man zunächst in an sich bekannter Weise [vgl. z.B. EP-A 00 17 001] aus einem oder mehreren festen Pflanzenschutz-Wirkstoffen, einem oder mehreren Dispergiermitteln und einem Verdickungsmittel ein Suspensionskonzentrat herstellt, und anschließend dieses Suspenspensionskonzentrat mit einem Netzmittel und ggf. einem organischen Lösungsmittel vermischt.

Die Herstellung des Suspensionskonzentrats erfolgt durch Vermahlen der Bestandteile (Pflanzenschutz-Wirkstoffe, Dispergiermittel und Verdicker in einem Dispergiermedium). Üblicherweise verwendet man hierbei Wasser als Dispergiermedium.

In dem Suspensionskonzentrat sollten die Festteilchen in einem Korngrößenbereich von 20 bis 90 % < 2 mikron, vorzugsweise 40 bis 70 % < 2 mikron vorliegen (gemessen mit Cilas Granulometer 715, Fa. Cilas, Marcoussis, Frankreich). Bei zu grober Korngrößenverteilung kommt es zu verstärkten Sedimentation, während eine zu feine Verteilung zu Aggregaten aus Flüssig- und Festteilchen führen kann, die eine Ausflockung zufolge hat.

Das so erhaltene Suspensionskonzentrat wird in geeigneter Weise mit einem Netzmittel bzw. einer Mischung aus Netzmittel und einem organischen Lösungsmittel vermischt und anschließend mit Wasser verdünnt.

Üblicherweise geht man dabei so vor, daß man das Netzmittel bzw. die Mischung aus Netzmittel und dem organischen Lösungsmittel tropfenförmig in das Suspensionskonzentrat verteilt. Zur Verteilung bedarf es zur Verhinderung der Koaleszenz zu großer Tropfen einer Mindestenergie. Andererseits darf eine Maximalenergie nicht überschritten werden. Bevorzugt liegt die Energiedichte bei der Vermischung im allgemeinen bei 0,2 bis 20 Wh/l, vorzugsweise 1 bis 3 Wh/l. Die Tropfenzerkleinerung kann mit herkömmlichen Mischern und Dispergatoren erfolgen. Besonders bevorzugt verwendet man Ringspaltmühlen vom Rotor-Stator-Typ.

Hierbei wird die Ausbildung des erfindungsgemäßen stabilen Mehrphasengemisches zweckmäßigerweise im Temperaturbereich von 10 bis 30°C, vorzugsweise 15 bis 25°C, vorgenommen, da eine zu hohe Temperatur die Stabilisierung der Teilchen durch thermische Diffusionsprozesse gefährdet, während eine zu niedrige Temperatur die Zerteilung der organischen flüssigen Phase behindert, da die Viskosität absinkt.

Neben den genannten essenziellen Bestandteilen können den erfindungsgemäßen Fertigformulierungen weitere Zusatzstoffe wie Frostschutzmittel, Bakterizide und Antischaummittel zugesetzt werden.

Für das erfindungsgemäße Mehrphasengemisch ist der Emulgierschnitt, d.h. die tropfenförmige Verteilung des Netzmittels, bzw. des Netzmittels und des Lösungsmittelzusatzes in dem wäßrigen Medium, von besonderer Bedeutung. Die Zerkleinerungsfähigkeit ist nach Literaturangaben (vgl. H. Schubert et al., Chem. Ing.-Tech. 61 (9), 701 [1989]) umgekehrt proportional der Grenzflächenspannung und der Weberzahl (Viskositätsunterschied zwischen disperser und kontinuierlicher Phase) und direkt proportional der Reynold-Spannung (Schergeschwindigkeitsdifferenz multipliziert mit der Dichte der kontinuierlichen Phase).

Da in der erfindungsgemäßen Fertigformulierung durch die hohe Netzmittelkonzentration eine besonders niedrige Grenzflächenspannung vorliegt, sollte die feinteilige Ausbildung schon mit geringem Energieaufwand erfolgen können. Versuche mit den erfindungsgemäßen Fertigformulierungen zeigen, daß bei Netzmitteln von ausgesprochen bipolarem Aufbau, die in Wasser in mizellaren Strukturen vorliegen, gegenteilige Ergebnisse erhalten werden, obwohl die Grenzflächenspannung in einen nicht mehr meßbaren niedrigen Bereich absinkt.

Aufgrund dieser Befunde ist anzunehmen, daß in den beschriebenen Fällen die mizellaren Bestandteile nicht zur Ausbildung einer stabilen separaten Phase fähig sind und die Ausbildung der mizellaren Strukturen durch die Zugabe eines unpolaren Zusatzes mit gutem Lösungsvermögen für das Netzmittel unterbunden bzw. behindert werden muß. Als Folge steigt die Grenzflächenspannung wieder zu höheren eindeutig meßbaren Größenordnungen an. Für die Stabilisierung der neugebildeten Tropfen ist außerdem die schnelle Belegung der neuen Phasengrenze wichtig, die nach Erreichung eines dynamischen Gleichgewichtes entsprechend der Gibbschen Isothermengleichung ausgebildet ist. Die Wiederherstellung dieses Adsorptionsgleichgewichtes und die damit verbundene Belegungsdichte erfolgt mit den in den Beispielen beschriebenen Dispergiermitteln aufgrund der Stabilitätsbefunde offenbar besonders schnell und vollständig.

Die erfindungsgemäßen Fertigformulierungen sind lagerstabil, d.h. auch bei Lagerung über einen längeren Zeitraum tritt weder eine Phasentrennung auf noch bilden sich Aggregate aufgrund von Phasenvermischung. Die erfindungsgemäßen Formulierungen bieten weiterhin den Vorteil, daß dem Anwender eine biologisch optimierte und einfach anzuwendende Aufbereitung des Pflanzenschutz- Wirkstoffs bzw. der Pflanzenschutz-Wirkstoffe in Verbindung mit den benötigten Netzmitteln zur Verfügung steht. Für den Anwender entfällt somit die getrennte Zudosierung der Hilfsstoffe.

Beispiele für erfindungsgemäße Fertigformulierungen sind in den anschließenden Tabellen 1 bis 11 zusammengestellt.

**Tabelle 1**

| Komponente | Menge [g/l] | Bezeichnung |
|---|---|---|
| a) Wirkstoff | 200 | Chloridazon |
| b) Dispergierm. 1 | 30 | Pluronic® PE 10500 |
| c) Dispergierm. 2 | 20 | Wettol® D1 |
| d) Netzmittel | 100 | Wettol® LF 224 |
| f) Lösungsmittel | 100 | Xylol |
| e) Verdickungsmittel | 2 | Kelzan® S |

**Tabelle 2**

| Komponente | Menge [g/l] | Bezeichnung |
|---|---|---|
| a) Wirkstoff | 100 | Carbendazim |
| b) Dispergierm. 1 | 30 | Pluronic® PE 10500 |
| c) Dispergierm. 2 | 20 | Wettol® D1 |
| d) Netzmittel | 200 | Wettol® LF 700 |
| f) Lösungsmittel | 150 | Solvesso® 200 |
| e) Verdickungsmittel | 2 | Kelzan® KQ 14 b |

**Tabelle 3**

| Komponente | Menge [g/l] | Bezeichnung |
|---|---|---|
| a) Wirkstoff | 150 | Epoxiconazol |
| b) Dispergierm. 1 | 30 | Pluronic® PE 10500 |
| c) Dispergierm. 2 | 40 | Wettol® D1 |
| d) Netzmittel | 200 | Wettol® LF 700 |
| f) Lösungsmittel | 150 | Solvesso® 200 |
| e) Verdickungsmittel | 1 | Kelzan® S |

Die in den Tabellen 1 bis 3 zusammengestellten Mischungen werden jeweils mit Wasser auf 1 000 ml aufgefüllt.

### Herstellungsbeispiele

### Beispiel 1

400 g Chloridazon, 40 g PLURONIC PE® 10500, 40 g WETTOL D1®, 40 g 1,2-Propylenglycol, 3,2 g KELZAN® S^{a}, 4,0 g PROXEL® GXL^{b} und 3,0 g SILICON SRE^{c} wurden mit Wasser auf 1 l aufgefüllt und anschließend in einer Kugelmühle zu einer Teilchengröße von 80% < 2 mikron (gemessen mit Cilas 715) vermahlen.
^{a} Xanthan Gum-Andicker, Kelco-Co.
^{b} Bakterizid, ICI
^{c} Antischaummittel, Wackerchemie

In die so hergestellte Suspension wurden bei RT 500 ml einer Lösung von 60 Gew.-Teilen WETTOL® LF 700^{d} mit 40 Gew.-Teilen SOLVESSO® 200^{e} unter Verwendung eines Propellerrührers bei einer Energiedichte von 1 Wh/l eingerührt.
^{d} C₁₂-C₁₄-Fettalkoholalkoxylat, BASF
^{e} C₁₁/C₁₂-Alkylbenzolderivat, EXXON

Die so hergestellte Formulierung wies eine Viskosität von 110 mPas bei 20°C und einer Schergeschwindigkeit von 100 s⁻¹ auf. Es wurde ein stabiles Mehrphasengemisch erhalten, in dem die Teilchengröße 68 % < 2 mikron betrug.

### Beispiel 2 bis 4

Die in den Tabellen 1 bis 3 angegebenen Zusammensetzungen werden entsprechend Beispiel 1 zu einem stabilen Mehrphasengemisch verarbeitet, indem der Wirkstoff a) zusammen mit dem Dispergiermittel b) und c), dem Verdickungsmittel e) und 4,0 g Proxel® GXL mit Wasser auf 1 l aufgefüllt und anschließend in der Kugelmühle zu einer Teilchengröße von 70 % < 2 mikron (gemessen mit Cilas 715) vermahlen wurde.

In die so hergestellte Suspension wurden der Bestandteil d), gegebenenfalls gelöst, unter Verwendung einer Rotor-Stator-Mühle (Typ K/60/S der Firma Probst und Klaus, Rastatt) mit geschlossenem oder leicht geöffnetem Spalt bei einer Energiedichte von 2 Wh/l eingerührt.

## Patentansprüche

1. Wäßrige, mehrphasige, stabile Fertigformulierung für Pflanzenschutz-Wirkstoffe, enthaltend neben Wasser
a) 10 bis 700 g/l eines oder mehrerer Pflanzenschutz-Wirkstoffe,
b) 10 bis 70 g/l eines oder mehrerer Blockpolymeren als Dispergiermittel, welche aus einem Polyoxypropylenkern vom Molgewicht 3000 bis 3500 und der Differenz zur Molmasse 6000 bis 7000 aus Ethylenoxideinheiten bestehen,
c) 5 bis 80 g/l eines anionischen Dispergiermittels,
d) 50 bis 500 g/l eines oder mehrerer Netzmittel aus der Gruppe der Polyoxyethylen- oder Polyoxyethylen-Polyoxypropylen-Fettalkohole,
e) 0,5 bis 5 g/l eines oder mehrerer Verdickungsmittel und
f) ggf. ein organisches Lösungsmittel.

2. Fertigformulierung nach Anspruch 1, welche als Pflanzenschutz-Wirkstoff Epoxiconazol enthält.

3. Fertigformrnlierung nach Anspruch 1 oder 2, in der der CMC-Wert des verwendeten Netzmittels in destilliertem Wasser 1·10⁻⁵ bis 1·10⁻² % beträgt.

4. Fertigformulierung nach den Ansprüchen 1 bis 3, in der die Grenzflächenspannung des verwendeten Netzmittels zu Wasser bei 20°C mindestens 3·10⁻¹ mN/m beträgt.

5. Verfahren zur Herstellung einer Fertigformulierung gemäß den Ansprüchen 1 bis 4, dadurch gekennzeichnet, daß man
a) durch Vermahlen ein Suspensionskonzentrat aus 10 bis 700 g/l eines oder mehrerer fester Pflanzenschutz-Wirkstoffe, einem oder mehreren Dispergiermitteln gemäß Anspruch 1(b), einem Dispergiermittel gemäß Anspruch 1(c) und 0,5 bis 5 g/l eines oder mehrerer Verdickungsmitteln herstellt,
b) dieses Suspenspensionskonzentrat mit einem Netzmittel gemäß Anspruch 1(d) und ggf. einem organischen Lösungsmittel vermischt, und
c) diese Mischung in Wasser verteilt.

6. Verfahren zur Herstellung einer Fertigformulierung nach Anspruch 5, dadurch gekennzeichnet, daß die Energiedichte bei der Vermischung 0,2 bis 20 Wh/l beträgt.

7. Verwendung von Pflanzenschutz-Wirkstoffen zur Herstellung einer Fertigformulierung gemäß den Ansprüchen 1 bis 4.

## Claims

1. An aqueous, multiphase, stable finished formulation for crop protection active compounds containing, in addition to water,
a) 10 to 700 g/l of one or more crop protection active compounds,
b) 10 to 70 g/l of one or more block polymers, as dispersants, which consist of a polyoxypropylene core of molecular weight 3,000 to 3,500 and the remainder to a combined molecular weight of 6,000 to 7,000 comprising ethylene oxide units,
c) 5 to 80 g/l of an anionic dispersant,
d) 50 to 500 g/l of one or more wetting agents from the group consisting of polyoxyethylene and polyoxyethylene-polyoxypropylene fatty alcohols,
e) 0.5 to 5 g/l of one or more thickeners and
f) if appropriate an organic solvent

2. A finished formulation as claimed in claim 1, which contains epoxiconazole as the crop protection active compound.

3. A finished formulation as claimed in claim 1 or 2, in which the CMC of the wetting agent used is from 1 x 10⁻⁵ to 1 x 10⁻² % in distilled water.

4. A finished formulation as claimed in any of claims 1 to 3, in which the interfacial tension of the wetting agent used relative to water at 20°C is at least 3 x 10⁻¹ mN/m.

5. A process for preparing a finished formulation as claimed in any of claims 1 to 4, which comprises
a) preparing a suspension concentrate from 10 to 700 g/l of one or more solid crop protection active compounds, one or more dispersants as set forth in claim 1(b), a dispersant as set forth in claim 1(c) and 0.5 to 5 g/l of one or more thickeners by grinding,
b) mixing this suspension concentrate with a wetting agent as set forth in claim 1(d) and if appropriate an organic solvent, and
c) dispersing this mixture in water.

6. A process for preparing a finished formulation as claimed in claim 5, wherein the energy density during the mixing is 0.2 to 20 Wh/l.

7. The use of crop protection active compounds for preparing a finished formulation as claimed in any of claims 1 to 4.

## Revendications

1. Composition aqueuse prête à l'emploi, à plusieurs phases, stable, pour des substances actives phytosanitaires, qui contient, avec de l'eau,
a) de 10 à 700 g/l d'une ou plusieurs substances actives phyosanitaires,
b) de 10 à 70 g/l d'un ou plusieurs polymères séquencés servant d'agents dispersants et qui consistent en un noyau de polyoxypropylène de poids moléculaire 3 000 à 3 500, la différence avec le poids moléculaire de 6 000 à 7 000 consistant en motifs d'oxyde d'éthylène,
c) de 5 à 80 g/l d'un agent dispersant anionique,
d) de 50 à 500 g/l d'un ou plusieurs agents mouillants choisis parmi les alcools gras polyoxyéthylénés ou polyoxyéthylénés-polyoxypropylénés,
e) de 0,5 à 5 g/l d'un ou plusieurs agents épaississants et
f) le cas échéant un solvant organique.

2. Composition prête à l'emploi selon revendication 1, contenant en tant que substance phytosanitaire l'Epoxiconazol.

3. Composition prête à l'emploi selon revendication 1 ou 2, dans laquelle la valetir CMC de l'agent mouillant utilisé est dans l'eau distillée de 1 x 10⁻⁵ à 1 x 10⁻² %.

4. Composition prête à l'emploi selon les revendications 1 à 3, dans laquelle la tension superficielle de l'agent mouillant utilisé par rapport à l'eau à 20° C est d'au moins 3 x 10⁻¹ mN/m.

5. Procédé de préparation d'une composition prête à l'emploi selon les revendications 1 à 4, caractérisé par le fait que
a) on prépare par broyage un concentré en suspension de 10 à 700g/l d'une ou plusieurs substances actives phytosanitaires solides, d'un ou plusieurs agents dispersants selon revendication 1b), d'un agent dispersant selon revendication 1c) et de 0,5 à 5 g/l d'un ou plusieurs agents épaississants,
b) on mélange le concentré en suspension avec un agent mouillant selon revendication 1d) et le cas échéant un solvant organique et
c) on disperse ce mélange dans l'eau

6. Procédé de préparation d'une composition prête à l'emploi selon revendication 5, caractérisé par le fait que la densité d'énergie au mélange est de 0,2 à 20 Wh/l.

7. Utilisation de substances actives phytosanitaires pour la préparation d'une composition prête à l'emploi selon les revendications 1 à 4.
